# EUROPÄISCHE PATENTANMELDUNG

(11) **EP 3 179 230 A1**
(43) Veröffentlichungstag der Anmeldung: **14.06.2017**
(21) Anmeldenummer: 15198497.8
(22) Anmeldetag: 08.12.2015
(51) Int. Cl.: G01N 17/00

(54) **VERFAHREN UND VORRICHTUNG ZUR REAKTIONSBELASTUNG WENIGSTENS EINER PROBE**

(71) Anmelder: Voestalpine Stahl GmbH, 4020 Linz (AT)
(72) Erfinder: STELLNBERGER, Karl-Heinz, 4020 Linz (AT); LUCKENEDER, Gerald, 4812 Pinsdorf (AT); HASLEHNER, Gerald, 4052 Ansfelden (AT)
(74) Vertreter: Jell, Friedrich

(57) **Zusammenfassung**

Es wird ein Verfahren und eine Vorrichtung (1, 100) zur Reaktionsbelastung wenigstens einer Probe (2), mit einem eine Raumluft aufweisenden Belastungsraum (4) für die Probe (2), mit mindestens einer ersten und zweiten, gesättigten Salzlösung (6, 7, 8), die unterschiedliche Zusammensetzungen aufweisen, mit einer Umschalteinrichtung (9), in Abhängigkeit deren Schaltstellung der Belastungsraum (4) mit der ersten oder zweiten Salzlösung (6, 7, 8) wirkverbunden ist, die Luftfeuchtigkeit (ϕ) der Raumluft im Belastungsraum (4) an die charakteristische relative Luftfeuchte (60, 70, 80) über der jeweiligen Salzlösung (6, 7, 8) auf die Raumluft anzugleichen, und mit einer Einrichtung (10) zur Beeinflussung des Feuchteverlaufs (ϕ(t)) bei der Angleichung der Luftfeuchtigkeit (ϕ) der Raumluft im Belastungsraum (4) an die charakteristische relative Luftfeuchte (60, 70, 80) über der jeweiligen Salzlösung (6, 7, 8). Um eine Reaktionsbelastung der Probe (2) mit einem exakten Feuchteverlauf zu garantieren, wird vorgeschlagen, dass die Einrichtung (10) zur Beeinflussung des Feuchteverlaufs (ϕ(t)) einen, zusätzlich zur jeweiligen Salzlösung (6, 7, 8) auf die Luftfeuchtigkeit (ϕ) der Raumluft wirkenden Luftbe- und/oder -entfeuchter (12) aufweist.

## Beschreibung

Die Erfindung betrifft ein Verfahren und eine Vorrichtung zur Reaktionsbelastung wenigstens einer Probe, mit einem eine Raumluft aufweisenden Belastungsraum für die Probe, mit mindestens einer ersten und zweiten, gesättigten Salzlösung, die unterschiedliche Zusammensetzungen aufweisen, mit einer Umschalteinrichtung, in Abhängigkeit deren Schaltstellung der Belastungsraum mit der ersten oder zweiten Salzlösung wirkverbunden ist, die Luftfeuchtigkeit der Raumluft im Belastungsraum an die charakteristische relative Luftfeuchte über der jeweiligen Salzlösung auf die Raumluft anzugleichen, und mit einer Einrichtung zur Beeinflussung des Feuchteverlaufs bei der Angleichung der Luftfeuchtigkeit der Raumluft im Belastungsraum an die charakteristische relative Luftfeuchte über der jeweiligen Salzlösung.

Zur klimatischen Testung einer Probe ist eine Vorrichtung bekannt (DE4105440A1), bei der eine mit der Probe bestückte Messkammer bzw. ein Belastungsraum von einer Feuchtekammer zur nächsten Feuchtekammer transportieren wird. In diesen Feuchtekammern sind gesättigte Salzlösungen mit unterschiedlichen Zusammensetzungen vorgesehen, über denen sich eine charakteristische relative Luftfeuchte ausbildet, welche sich aus der Deliqueszenzfeuchte des Salzes bestimmt. Mit einer Umschalteinrichtung wird der Belastungsraum geöffnet, wodurch sich die Luftfeuchtigkeit der Raumluft im Belastungsraum an die charakteristische relative Luftfeuchte über der jeweiligen Salzlösung der Feuchtekammer angleicht. Zwar kann durch das Umschalten zwischen gesättigten Salzlösungen die Luftfeuchtigkeit im Belastungsraum vergleichsweise exakt eingestellt werden, nachteilig verursacht eine derartige Vorrichtung mit passiven Vorgängen aber einen vergleichsweise hohen Zeitaufwand. Daher schlägt die DE4105440A1 weiter vor, eine als Ventilator ausgebildete Einrichtung in der Feuchtekammer vorzusehen, um damit die Angleichung der Luftfeuchtigkeit im Belastungsraum zu beeinflussen. Solch ein Ventilator kann jedoch nur bedingt einem stetigen Feuchteverlauf im Belastungsraum führen, wobei zudem die Wirkungsweise solch eines Ventilators durch die variierende Beladungshöhe des Belastungsraums mit Proben vergleichsweise hohen Schwankungen unterliegen kann und damit unberechenbar ist. Eine derartige Vorrichtung ist daher unter anderem für jene Reaktionsbelastungen ungeeignet, bei denen einem vorgebebenen Änderung der Luftfeuchtigkeit im Belastungsraum gefolgt werden muss - wie dies beispielsweise bei einem Korrosionswechseltest nach VDA 233-102 der Fall ist.

Der Stand der Technik kennt eine Vielzahl anderer Vorrichtungen, welche mit Feuchtigkeitssensoren und Ultraschallzerstäubern die jeweilige Luftfeuchtigkeit bzw. das Feuchteverlauf im Belastungsraum einstellen. Diese sind konstruktiv und verfahrenstechnisch vergleichsweise aufwendig und bedürfen etwa eines laufenden Kalibrierens der Feuchtigkeitssensoren, um die vom Korrosionswechseltest geforderten Parameter einhalten zu können.

Die Erfindung hat sich daher die Aufgabe gestellt, eine Vorrichtung zur Reaktionsbelastung zu schaffen, mit der sowohl die Luftfeuchtigkeit als auch der Feuchteverlauf im Belastungsraum reproduzierbar eingestellt werden können. Zudem soll die Vorrichtung konstruktiv einfach ausgebildet und zu warten sein.

Die Erfindung löst die gestellte Aufgabe hinsichtlich der Vorrichtung dadurch, dass die Einrichtung zur Beeinflussung des Feuchteverlaufs einen, zusätzlich zur jeweiligen Salzlösung auf die Luftfeuchtigkeit der Raumluft wirkenden Luftbe- und/oder -entfeuchter aufweist.

Weist die Einrichtung zur Beeinflussung des Feuchteverlaufs einen, zusätzlich zur jeweiligen Salzlösung auf die Luftfeuchtigkeit der Raumluft wirkenden Luftbe- und/oder -entfeuchter auf, kann neben dem Feuchteverlauf, der sich aufgrund der Deliqueszenzfeuchte des Salzes einstellt, über aktive Mittel auch die Luftfeuchtigkeit im Belastungsraum angepasst werden. Erfindungsgemäß kann also je nach Bedarf kann der Feuchteverlauf der Luftfeuchtigkeit im Belastungsraum durch Ein- oder Austrag von Feuchtigkeit aktiv beschleunigt oder verlangsamt werden - womit beispielsweise die Trägheit und den damit verbundenen Zeitverlust eines passiven Feuchteverlaufs überwinden und so eine Vorrichtung mit exakten Reaktionsbelastungen schaffen kann.
Besonders kann sich aber die erfindungsgemäße Verwendung eines Luftbe- und/oder -entfeuchters dadurch auszeichnen, dass diese aktiven Mittel zur Luftbefeuchtung bzw. -entfeuchtung gegen das passive Bestreben der Raumluft im Belastungsraum in Richtung der Deliqueszenzfeuchte der Salzlösung wirken kann. Die Salzlösung wirkt sohin dämpfend auf die Wirkungsweise der aktiven Mittel, was beispielsweise ein Einschwingverhalten der Luftfeuchtigkeit im Belastungsraum von einer Deliqueszenzfeuchte auf die nächsten Deliqueszenzfeuchte verbessern kann. Zudem kann dadurch die erfindungsgemäße Vorrichtung gegenüber Parameterschwankungen vergleichsweise robust ausgebildet werden - welche Schwankungen sich beispielsweise bereits durch einen zwischen den Reaktionsbelastungen unbekannten Beladungszustand im Belastungsraum ergeben können.
Zudem kann die gesättigte Salzlösung sicherstellen, dass sich trotz eventueller aktiver Luftbe- oder -entfeuchtung zur Steuerung/Regelung des Feuchteverlaufs im Belastungsraum schließlich jene exakte Luftfeuchtigkeit im Belastungsraum einstellt, die der charakteristischen relativen Luftfeuchte über der jeweiligen Salzlösung entspricht. Erfindungsgemäß kann daher nicht nur eine genaue Führung des Feuchteverlaufs, sondern auch eine exakte Luftfeuchtigkeit im Belastungsraum gewährleistet werden. Damit kann es auch möglich sein, einem vergleichsweise komplexen Feuchteverlauf zu folgen, um beispielsweise die Probe mit einem Korrosionswechseltest nach VDA 233-102 zu belasten - Vorstehendes auch ohne jene aus dem Stand der Technik bekannten und vergleichsweise komplexen Regelungs- und Steuerungsmittel, womit die erfindungsgemäße Vorrichtung konstruktiv einfach ausgebildet kann.

Konstruktiv einfach gelöst kann der Luftbe- und/oder -entfeuchter im Belastungsraum vorgesehen sein. Zudem kann damit rasch auf die Luftfeuchtigkeit im Belastungsraum Einfluss genommen und somit auch eine deutlich höherer Dynamik im Feuchteverlauf realisierbar werden. Dies kann zur Durchführung von hochkomplexen Reaktionsbelastungen genützt werden, was die erfindungsgemäße Vorrichtung vielseitig verwendbar machen kann.

Die Einstellung des Feuchteverlaufs kann weiter verbessert werden, wenn die Vorrichtung eine Messeinrichtung zur Bestimmung der Luftfeuchtigkeit im Belastungsraum und eine mit der Messeinrichtung verbundene Steuerungs- oder Regelungseinrichtung aufweist, die mit dem Luftbe- und/oder -entfeuchter zum Steuern oder Regeln seiner Beeinflussung der Luftfeuchtigkeit der Raumluft im Belastungsraum verbunden ist. Hierzu kann die Messeinrichtung beispielsweise als Feuchtigkeitssensor ausgebildet sein.

Die Luftfeuchtigkeit im Belastungsraum kann vergleichsweise exakt eingestellt werden, indem die Vorrichtung eine Temperiereinrichtung aufweist, die zum Angleichen der Temperatur der Salzlösung an die Lufttemperatur im Belastungsraum ausgebildet ist. Damit sind nämlich Temperaturunterschiede zwischen der Salzlösung und der Luft über der Salzlösung ausgleichbar, um die von Salzlösungen bekannte Deliqueszenzfeuchte auch zuverlässig auf den Belastungsraum übertragen zu können. Diese Temperiereinrichtung kann beispielsweise als eine auf die Salzlösung thermisch wirkende elektrische Heizung ausgebildet sein.

Weisen der Belastungsraum ein Becken und die Umschalteinrichtung eine an das Becken angeschlossene Flüssigkeitsverbindung auf, wobei die Umschalteinrichtung in Abhängigkeit ihrer Schaltstellung zum Austauschen der Salzlösung des Beckens über die Flüssigkeitsverbindung ausgebildet ist, kann eine vergleichsweise kompakte Vorrichtung geschaffen werden. Zudem ist es möglich, die Steuerung/Regelung der Reaktionsparameter im Belastungsraum auch zur Parametereinstellung der Salzlösung herangezogen werden, was zu einer konstruktiven Einfachheit an der Vorrichtung führen kann. Außerdem kann entsprechend der Größe des Belastungsraums über die demensprechende Beckengröße auch eine vergleichsweise große Oberfläche der Salzlösung ermöglicht werden. Dies kann sich positiv auf den Feuchteverlauf auswirken, was der vielseitigen Verwendbarkeit der Vorrichtung weiter förderlich sein kann.

Die genannten Vorteile sind weiter erhöht, wenn sich das nach oben offene Becken über den gesamten Boden des Belastungsraums erstreckt, da so die relative charakteristische Luftfeuchte über der jeweiligen Salzlösung gleichmäßiger auf den Reaktionsraum übertragen werden kann. Die Führung des Feuchteverlaufs im Reaktionsraum kann damit weiter verbessert werden. Auch kann dadurch eine gleiche Reaktionsbelastung der Proben im Belastungsraum sichergestellt werden, dies zudem unabhängig von der Beladungshöhe des Belastungsraums mit Proben.

Konstruktiv einfach gelöst kann die Temperiereinrichtung in der Salzlösung im Becken vorgesehen sein, um die Temperatur der Salzlösung exakt an die Lufttemperatur im Belastungsraum anzugleichen.

Weist die Vorrichtung für jede Salzlösung eine eigene Feuchtekammer und die Umschalteinrichtung eine an den Belastungsraum und an die Feuchtkammern angeschlossene Gasverbindung auf, wobei die Umschalteinrichtung in Abhängigkeit ihrer Schaltstellung zum Verbinden der Feuchtekammern mit dem Belastungsraum über die Gasverbindung ausgebildet ist, kann der Belastungsraum frei von der Salzlösung bleiben. Dies kann unter anderem eine Verschmutzung der Salzlösung vermeiden und damit der Reproduzierbarkeit der Reaktionsbelastung förderlich sein. Außerdem ist dadurch vorstellbar, bestehende Vorrichtungen mit der erfindunsgemäße Idee einfach und kostengünstig nachzurüsten.

Weist die Gasverbindung Mittel zum Temperieren der Gasführung auf, können eventuelle Störeinflüsse auf die Steuerung/Regelung der Reaktionsparameter im Belastungsraum aufgrund des Eintrags der relativen charakteristischen Luftfeuchte der Salzlösung vermindert werden. Ein exakter Feuchteverlauf im Belastungsraum ist dadurch möglich - was der vielseitigen Verwendbarkeit der Vorrichtung förderlich ist. Derartige Mittel können unter anderem elektrische Heiz- oder Kühlelemente darstellen.

Die Erfindung hat sich außerdem die Aufgabe gestellt, ein Verfahren zu Reaktionsbelastung wenigstens einer Probe zu schaffen, das eine hohe Reproduzierbarkeit aufweist.

Die Erfindung löst die gestellte Aufgabe dadurch, dass diese Angleichung der Luftfeuchtigkeit an eine charakteristische relative Luftfeuchte der zweiten Salzlösung mit Hilfe eines Luftbe- und/oder -entfeuchters beeinflusst wird.

Wird dass der Feuchteverlauf zusätzlich zur Wirkung der jeweiligen Salzlösung auf die Luftfeuchtigkeit der Raumluft durch Be- oder Entfeuchten beeinflusst, kann das Verfahren gegenüber Parameterschwankungen vergleichsweise robust ausgebildet werden - welche Schwankungen sich beispielsweise bereits aus einem variierenden Beladungszustand im Belastungsraum ergeben können. Zudem kann (beispielsweise mit einem Luftbe- und/oder -entfeuchter) reaktionsschnell auf Parameterabweichungen regiert werden, was eine Vorgaben folgende exakte Reaktionsbelastung ermöglichen kann. Das Verfahren kann daher eine vergleichsweise hohen hohe Reproduzierbarkeit aufweist.

Die Reproduzierbarkeit des Verfahrens kann weiter verbessert werden, wenn die Probe in einem Belastungsraum vorgesehen wird, und dass die Raumluft des Belastungsraums be- oder entfeuchtet wird, um den Feuchteverlauf zu beeinflussen.

In den Figuren ist beispielsweis der Erfindungsgegenstand anhand von mehreren Ausführungsvarianten näher dargestellt. Es zeigen
- Fig. 1: eine schematische Ansicht auf eine Vorrichtung zur Reaktionsbelastung nach einem ersten Ausführungsbeispiel,
- Fig. 2: eine schematische Ansicht auf eine Vorrichtung zur Reaktionsbelastung nach einem zweiten Ausführungsbeispiel und

- Fig. 3: ein Feuchte- und Temperaturführung im Belastungsraum der nach den Figuren 1 und 2 dargestellten Vorrichtungen.

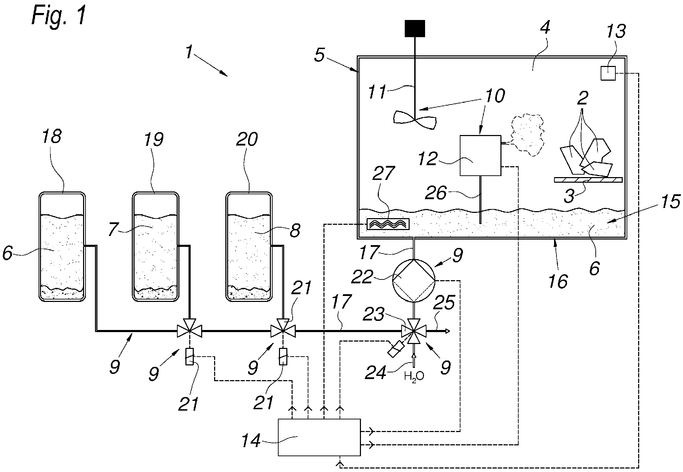

Gemäß Fig. 1 ist beispielhaft eine Vorrichtung 1 zur Reaktionsbelastung mehrerer Proben 2 dargestellt. Diese Proben 2 sind hierzu an einem Probenhalter 3 vorgesehen, der im Belastungsraum 4 der Prüfkammer 5 der Vorrichtung 1 auswechselbar befestigt ist.

Die Vorrichtung 1 weist zudem mehrere gesättigte Salzlösungen 6, 7, 8 mit unterschiedlichen Zusammensetzungen auf. In diesem Ausführungsbeispiel weist die erste gesättigte Salzlösung 6 als Salz NaCl, die zweite gesättigte Salzlösung 7 als Salz NH4NO3 und die dritte gesättigte Salzlösung 8 als Salz MgSO4 auf.

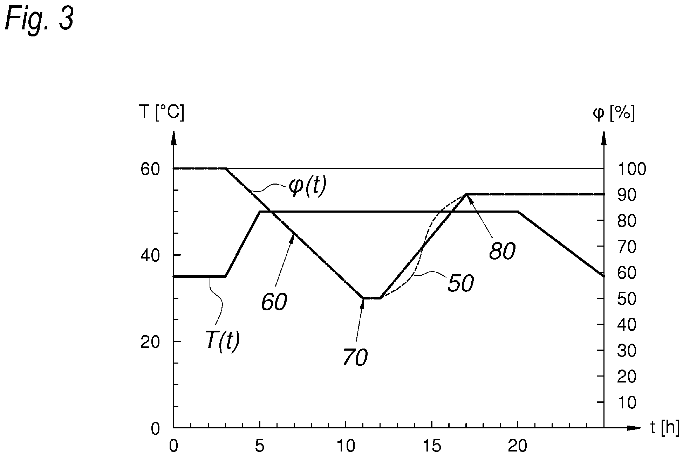

Mit Hilfe einer Umschalteinrichtung 9 wird nun in Abhängigkeit ihrer Schaltstellung der Belastungsraum 4 mit der ersten, zweiten oder dritten Salzlösung 6, 7, 8 verbunden, um damit die relative Luftfeuchtigkeit ϕ der Raumluft im Belastungsraum 4 an die charakteristische relative Luftfeuchte 60, 70, 80 über der jeweiligen Salzlösung 6, 7, 8 anzugleichen, welches Angleichen beispielsweise nach Fig. 3 zu erkennen ist. Dadurch ergibt sich ein Feuchteverlauf ϕ(t) im Belastungsraum 4, der von einer relativen Luftfeuchtigkeit ϕ von 60% ausgehend sich über die charakteristischen relativen Luftfeuchtigkeiten bzw. Deliqueszenzfeuchten 60, 70 der Salzlösung 6, 7 zur charakteristischen relativen Luftfeuchtigkeit bzw. Deliqueszenzfeuchte 80 der Salzlösung 8 hin entwickelt.

Im Belastungsraum 4 der Prüfkammer 5 der Vorrichtung 1 ist auch eine Einrichtung 10 zur Beeinflussung der Luftfeuchtigkeit ϕ der Raumluft im Belastungsraum 4 - nämlich zur Angleichung der Luftfeuchtigkeit ϕ der Raumluft im Belastungsraum 4 an die charakteristische relative Luftfeuchte 60, 70, 80 über der jeweiligen Salzlösung 6, 7, 8 - vorgesehen. Diese Einrichtung 10 kann beispielsweise ein Ventilator 11 darstellen, der zur Vergleichmäßigung der Luftfeuchtigkeit ϕ der Raumluft im Belastungsraum 4 dient. Ein Ventilator 11 ist jedoch zur Einstellung eines vorgegebenen Feuchteverlaufs ϕ(t) - wie solch eines beispielsweise nach Fig. 3 gezeigt wird - nicht geeignet. Erfindungsgemäß wird diese ermöglicht, indem die Einrichtung 10 einen mit dem Belastungsraum verbunden Luftbe- und -entfeuchter 12 aufweist. Im Allgemeinen wird erwähnt, dass der Luftbe- und/oder -entfeuchter 12 zum Verdampfen und/oder Kondensieren von Flüssigkeit ausgebildet ist. Damit kann entsprechend der Vorgabe zum Feuchteverlauf ϕ(t) je nach Bedarf eine aktive Erhöhung oder Reduktion der Luftfeuchtigkeit ϕ der Raumluft im Belastungsraum 4 durchgeführt werden, was eine besonders hohe Dynamik im Feuchteverlauf ϕ(t) ermöglicht. Der Luftbefeuchter und -entfeuchter 12 weist hierzu einen Ultraschallzerstäuber zum Verdampfen von Flüssigkeit sowie Kondensationsflächen einer Kältemaschine zum Kondensieren von Flüssigkeit auf.

Das erfindungsgemäße Verfahren wird beispielsweise in der Fig. 3 zwischen den Deliqueszenzfeuchten 70 und 80 verdeutlicht. So ist in diesem Bereich die vergleichsweise überzeichnet dargestellte, passive Feuchteveränderung 50 der auf die Probe einwirkenden Luftfeuchtigkeit ϕ mit Hilfe der Deliqueszenzfeuchte 80 der Salzlösung 8 strichliert dargestellt. Wie ausgehend von der Deliqueszenzfeuchte 70 im Verlauf der passiven Feuchteveränderung 50 zu erkennen, entspricht diese nicht dem gewünschten Feuchteverlauf ϕ(t). Der Luftbe- und -entfeuchter 12 greift hier regulierend ein, indem dieser zur passiven Befeuchtung der auf die Probe 2 einwirkenden Luftfeuchtigkeit ϕ zusätzlich die Raumluft aktiv mit Feuchtigkeit anreichert, um dem gewünschten Feuchteverlauf ϕ(t) zu entsprechen. Nach dem Schnittpunkt beider Verläufe, nämlich passive Feuchteveränderung 50 und gewünschtem Feuchteverlauf ϕ(t), übt der Luftbe- und -entfeuchter 12 eine entfeuchtende Wirkung auf die auf die Probe 2 einwirkende Raumluft aus - damit durch aktiven Austrag von Feuchtigkeit aus der Raumluft auch hier dem gewünschten Feuchteverlauf ϕ(t) entsprochen wird.

Zudem wirkt diese aktive Luftbefeuchtung mit der passiven Luftbefeuchtung der Salzlösung zusammen oder dieser entgegen - wobei Letzteres eine dämpfende Wirkung auf das Einschwingverhalten von einer ersten Deliqueszenzfeuchten 60 oder 70 auf eine zweite Deliqueszenzfeuchten 70 oder 80 ausübt und damit das Feuchteverlauf ϕ(t) in engen Grenzen halten kann. Die erfindunsgemäße Vorrichtung 1 kann daher reproduzierbar eine standfeste Reaktionsbelastung gewährleisten.

Zudem ist im Belastungsraum 4 eine Messeinrichtung 13 zur Bestimmung der Luftfeuchtigkeit ϕ vorgesehen, die einen nicht näher dargestellten Feuchtigkeitssensor aufweist. Diese Messeinrichtung 13 ist mit einer Steuerungs- oder Regelungseinrichtung 14 verbunden. Mithilfe dieser Steuerungs- oder Regelungseinrichtung 14 kann der Ist-Wert der Luftfeuchtigkeit ϕ aus der Messeinrichtung 13 kontinuierlich an einen vorgegebenen Soll-Wert durch kontrollierte Steuerung der Einrichtung 10 angeglichen werden. Ein solcher veränderlicher Soll-Wert der Luftfeuchtigkeit ϕ im Belastungsraum 4 kann etwa einen zeitlichen Verlauf - wie in Fig. 3 dargestellt - aufweisen. So kann mittels Befeuchtung oder Entfeuchtung der Raumluft im Belastungsraum 4 eine besonders genaue Anpassung der Luftfeuchtigkeit ϕ an einen vorgegeben Feuchteverlauf ϕ(t) ermöglichen.

Die Vorrichtung 1 weist zudem eine Temperiereinrichtung 27 auf, welche die jeweils mit dem Belastungsraum 4 verbundene Salzlösung 6, 7, 8 temperieret. Dies dient zum Angleich der Temperatur der Salzlösung 6, 7, 8 an die Lufttemperatur T im Belastungsraum, was eine exakte Einstellung der Luftfeuchtigkeit ϕ ermöglicht - und zwar selbst dann, wenn sich die Lufttemperatur T, wie in Fig. 3 in Grad Celsius zu erkennen, über die Zeit ändert. Hierzu ist die als elektrische Heizung ausgebildete Temperiereinrichtung 27 in der jeweiligen Salzlösung 6, 7, 8 vorgesehen, die in einem Becken 15 eingebracht wird, das sich im Belastungsraum 4 der der Prüfkammer 5 befindet. Das nach oben offene Becken 15 erstreckt sich über den gesamten Boden 16 des Belastungsraums 4, was die Reaktionsbelastung über den Belastungsraum 4 vergleichmäßigt. Die Vorrichtung 1 kann daher reproduzierbar in jedem Bereich des Belastungsraums 4 gleiche Verhältnisse in der Reaktionsbelastung sicherstellen, was diese Vorrichtung auch unempfindlich gegenüber unterschiedlichsten Beladungshöhen an Proben 2 macht.

Zum Einbringen der jeweiligen gesättigten Salzlösung 6, 7, 8 in das Becken 15 der Prüfkammer 5 weist die Umschalteinrichtung 9 eine als Flüssigkeitsleitung ausgeführte Flüssigkeitsverbindung 17 auf, über welche die Vorratsbehälter 18, 19, 20 mit den gesättigten Salzlösungen 6, 7, 8 mit dem Becken 15 verbunden sind. Mit Ventilen 21 der Umschalteinrichtung 9, die in der Flüssigkeitsverbindung 17 vorgesehen sind und von der Steuerungs- oder Regelungseinrichtung 14 angesteuert werden, kann der jeweilige Vorratsbehälter 18, 19, 20 von der Umschalteinrichtung 9 ausgewählt werden. Über die Flüssigkeitsverbindung 17 kann sohin die gesättigte Salzlösung 6, 7, 8 aus den jeweiligen Vorratsbehältern 18, 19, 20 abgezogen werden. Damit kann die Umschalteinrichtung 9 in Abhängigkeit der Schaltstellung ihrer Ventile 21 die Salzlösung 6 im Becken 15 durch die Salzlösung 7 im Vorratsbehälter 19 austauschen bzw. die Salzlösung 6 im Becken 15 in den Vorratsbehälter 18 zurückleiten und anschließend die Salzlösung 7 des Vorratsbehälters 19 in das leere Becken 15 einleiten. Das Austauschen der Salzlösungen 6, 7, 8 wird durch eine Pumpe 22 der Umschalteinrichtung 9 erreicht, die steuerverbunden mit der Steuerungsoder Regelungseinrichtung 14 ist.

In die Flüssigkeitsverbindung 17 mündet über ein Wartungsventil 23 auch eine Spülleitung 24, mit der die Vorrichtung 1 durch eine Spülflüssigkeit, beispielsweise H₂O, gereinigt werden kann. Diese zugeführte Spülflüssigkeit kann über das Wartungsventil 23 durch eine Abflussleitung 25 von der Vorrichtung 1 abgeführt werden. Zudem kann über die Spülleitung 24 je nach Bedarf auch eine Auffüllung der Vorratsbehälter 18, 19, 20 erfolgen - etwa, um eventuelle Flüssigkeitsverluste durch Verdunstung zu kompensieren. Das Wartungsventil 23 ist ebenso Teil der Umschalteinrichtung 9 und ist mit der Steuerungs- oder Regelungseinrichtung 14 schaltverbunden.

Wie der Fig. 1 weiter zu entnehmen, ist der Luftbe- und/oder -entfeuchter 12 im Belastungsraum 4 vorgesehen. Damit kann schnell auf die Luftfeuchtigkeit ϕ im Belastungsraum 4 eingewirkt werden - wodurch einem vorgegeben Feuchteverlauf besonders exakt gefolgt werden kann. Der Luftbe- und -entfeuchter 12 bezieht die zu verdampfende Flüssigkeit vom Becken 15 und taucht hierzu in die jeweilige Salzlösung 6 des Beckens 15 mit einem Saugrohr 26 ein. Beim Entfeuchten kann das Saugrohr 26 benützt werden, die kondensierte Flüssigkeit in das Becken 15 einzuleiten.

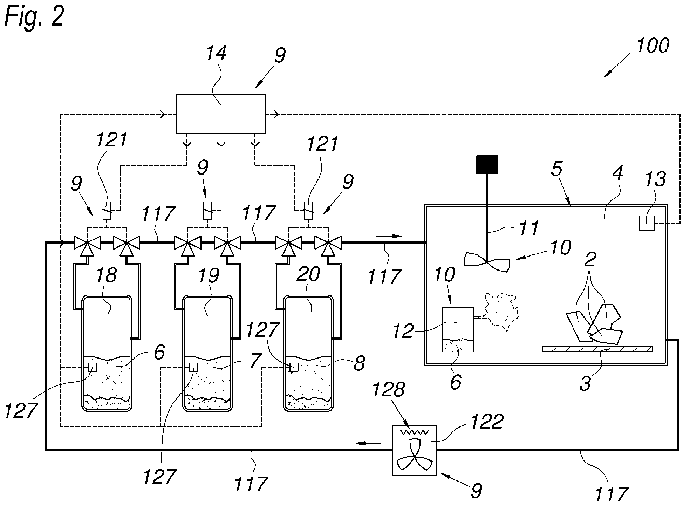

Die gemäß Fig. 2 dargestellte Vorrichtung 100 unterscheidet sich von jener nach Fig. 1 dargestellten Vorrichtung 1 im Wesentlichen dadurch, dass die Salzlösungen 8, 9, 10 nicht in den Reaktionsraum 4 der Prüfkammer 5 der Vorrichtung 1 eingebracht werden. Bei der Vorrichtung 100 verbindet die Umschalteinrichtung 9 den Belastungsraum 4 mit der jeweiligen Salzlösung 8, 9, 10 über eine als Gasleitung ausgebildete Gasverbindung 117. Die Gasverbindung 117 ist über Ventile 121 der Umschalteinrichtung 9 mit den Vorratsbehältern 18, 19, 20, in denen sich die Salzlösungen 8, 9, 10 befinden, derart verbunden, dass die charakteristische relative Luftfeuchte 60, 70, 80 über der jeweiligen Salzlösung 6, 7, 8 in den Belastungsraum 4 eingebracht werden kann. Hierzu werden die relevanten Ventile 121 von der Steuerungs- oder Regelungseinrichtung 14 entsprechend angesteuert. Durch die Gasverbindung 117 wird dem Belastungsraum 4 die jeweilige charakteristische relative Luftfeuchte 60, 70, 80 bzw. Deliqueszenzfeuchte aufgezwungen bzw. gleicht sich die Luftfeuchtigkeit ϕ im Belastungsraum 4 an diese an.

Zur Führung der Luftfeuchtigkeit ϕ im Belastungsraum 4 weist die Vorrichtung 100 - gleich wie bei Vorrichtung 1 - einen Luftbe- und/oder -entfeuchter 112 im Belastungsraum 4 auf. Dieser Luftbe- und -entfeuchter 112 kann aber auch Teil an einer anderen Stelle, beispielsweise in der Gasverbindung 117 oder in jedem Vorratsbehälter 18, 19, 20 vorgesehen sein. Der Luftbe- und -entfeuchter 112 speichert die zu verdampfende Salzlösung 6 oder die dem Belastungsraum 4 entzogene Flüssigkeit selbst - es ist aber auch im Allgemeinen vorstellbar, Wasser im Luftbe- und - entfeuchter 112 zu verwenden.

Der Umschalteinrichtung 9 ist auch ein Gebläse 122 zugeordnet, das die Gasverbindung zwischen den Vorratsbehältern 18, 19, 20 und dem Belastungsraum 4 unterstützt. Die Gasverbindung 117 weist auch ein Mittel 128 zur Temperierung der Gasführung auf, welches Mittel 117 als elektrische Heizung am Gebläse 122 konstruktiv einfach realisiert ist.

## Patentansprüche

1. Vorrichtung zur Reaktionsbelastung wenigstens einer Probe (2), mit einem eine Raumluft aufweisenden Belastungsraum (4) für die Probe (2), mit mindestens einer ersten und zweiten, gesättigten Salzlösung (6, 7, 8), die unterschiedliche Zusammensetzungen aufweisen, mit einer Umschalteinrichtung (9), in Abhängigkeit deren Schaltstellung der Belastungsraum (4) mit der ersten oder zweiten Salzlösung (6, 7, 8) wirkverbunden ist, die Luftfeuchtigkeit (ϕ) der Raumluft im Belastungsraum (4) an die charakteristische relative Luftfeuchte (60, 70, 80) über der jeweiligen Salzlösung (6, 7, 8) auf die Raumluft anzugleichen, und mit einer Einrichtung (10) zur Beeinflussung des Feuchteverlaufs (ϕ(t)) bei der Angleichung der Luftfeuchtigkeit (ϕ) der Raumluft im Belastungsraum (4) an die charakteristische relative Luftfeuchte (60, 70, 80) über der jeweiligen Salzlösung (6, 7, 8), **dadurch gekennzeichnet, dass** die Einrichtung (10) zur Beeinflussung des Feuchteverlaufs (ϕ(t)) einen, zusätzlich zur jeweiligen Salzlösung (6, 7, 8) auf die Luftfeuchtigkeit (ϕ) der Raumluft wirkenden Luftbe- und/oder -entfeuchter (12) aufweist.

2. Vorrichtung nach Anspruch 1, **dadurch gekennzeichnet, dass** der Luftbe- und/oder -entfeuchter (12) im Belastungsraum (4) vorgesehen ist.

3. Vorrichtung nach Anspruch 1 oder 2, **dadurch gekennzeichnet, dass** die Vorrichtung eine Messeinrichtung (13) zur Bestimmung der Luftfeuchtigkeit (ϕ) im Belastungsraum (4) und eine mit der Messeinrichtung (13) verbundene Steuerungs- oder Regelungseinrichtung (14) aufweist, die mit dem Luftbe- und/oder -entfeuchter (12) zum Steuern oder Regeln seiner Beeinflussung der Luftfeuchtigkeit (ϕ) der Raumluft im Belastungsraum (4) verbunden ist.

4. Vorrichtung nach einem der Ansprüche 1 bis 3, **dadurch gekennzeichnet, dass** die Vorrichtung (1, 100) eine Temperiereinrichtung (27, 127) aufweist, die zum Angleichen der Temperatur der Salzlösung (6, 7, 8) an die Lufttemperatur im Belastungsraum (4) ausgebildet ist.

5. Vorrichtung nach einem der Ansprüche 1 bis 4, **dadurch gekennzeichnet, dass** der Belastungsraum (4) ein Becken (15) und die Umschalteinrichtung (9) eine an das Becken (15) angeschlossene Flüssigkeitsverbindung (17) aufweisen, wobei die Umschalteinrichtung (9) in Abhängigkeit ihrer Schaltstellung zum Austauschen der Salzlösung (6, 7, 8) des Beckens (15) über die Flüssigkeitsverbindung (17) ausgebildet ist.

6. Vorrichtung nach Anspruch 5, **dadurch gekennzeichnet, dass** sich das nach oben offene Becken (15) über den gesamten Boden (16) des Belastungsraums (4) erstreckt.

7. Vorrichtung nach Anspruch 5 oder 6, **dadurch gekennzeichnet, dass** die Temperiereinrichtung (27) in der Salzlösung (6, 7, 8) im Becken (15) vorgesehen ist.

8. Vorrichtung nach einem der Ansprüche 1 bis 7, **dadurch gekennzeichnet, dass** die Vorrichtung für jede Salzlösung (6, 7, 8) eine eigene Feuchtekammer (18, 19, 20) und die Umschalteinrichtung (9) eine an den Belastungsraum (4) und an die Feuchtkammern (18, 19, 20) angeschlossene Gasverbindung (117) aufweist, wobei die Umschalteinrichtung (9) in Abhängigkeit ihrer Schaltstellung zum Verbinden der Feuchtekammern (18, 19, 20) mit dem Belastungsraum (4) über die Gasverbindung (117) ausgebildet ist.

9. Vorrichtung nach Anspruch 8, **dadurch gekennzeichnet, dass** die Gasverbindung (117) Mittel (128) zum Temperieren der Gasverbindung (117) aufweist.

10. Verfahren zur Reaktionsbelastung wenigstens einer Probe (2), bei dem eine auf die Probe (2) einwirkende Luftfeuchtigkeit (ϕ) mit Hilfe von gesättigten Salzlösungen (6, 7, 8) mit unterschiedlichen chemische Zusammensetzungen von einer charakteristischen relativen Luftfeuchte (60, 70, 80) einer ersten Salzlösung (6, 7, 8) auf eine charakteristische relative Luftfeuchte (60, 70, 80) einer zweiten Salzlösung (6, 7, 8) angeglichen wird und bei dieser Angleichung der Feuchteverlauf (ϕ(t)) beeinflusst wird, **dadurch gekennzeichnet, dass** der Feuchteverlauf (ϕ(t)) zusätzlich zur Wirkung der jeweiligen Salzlösung (6, 7, 8) auf die Luftfeuchtigkeit (ϕ) der Raumluft durch Be- oder Entfeuchten beeinflusst wird.

11. Verfahren nach Anspruch 10, **dadurch gekennzeichnet, dass** die Probe (2) in einem Belastungsraum (4) vorgesehen wird, und dass die Raumluft des Belastungsraums (4) be- oder entfeuchtet wird, um den Feuchteverlauf (ϕ(t)) zu beeinflussen.
